# EUROPÄISCHE PATENTSCHRIFT

(11) **EP 2 844 899 B1**
(45) Veröffentlichungstag und Bekanntmachung des Hinweises auf die Patenterteilung: **06.04.2016**
(21) Anmeldenummer: 13718140.0
(22) Anmeldetag: 09.04.2013
(51) Int. Cl.: F16K 1/22, F16K 27/02

(54) **ABSPERRARMATUR**
ISOLATION VALVE
ROBINET D'ARRÊT

(30) Priorität: 30.04.2012 DE 102012103779; 26.06.2012 DE 102012105586
(43) Veröffentlichungstag der Anmeldung: 11.03.2015
(73) Patentinhaber: Metso Flow Control Oy, 01380 Vantaa (FI)
(72) Erfinder: PAUER, Andreas, 86179 Augsburg (DE); TSCHORN, Michael, 86508 Oberottmarshausen (DE)
(74) Vertreter: Geirhos, Johann
(86) Internationale Anmeldenummer: PCT/EP2013/057372
(87) Internationale Veröffentlichungsnummer: WO 2013/164162

(56) Entgegenhaltungen:
- EP-A1- 2 433 887
- EP-B1- 1 207 325
- DE-A1-102009 057 491
- GB-A- 2 284 647

## Beschreibung

Die Erfindung betrifft eine Absperrarmatur mit einem Gehäuse, einem in dem Gehäuse angeordneten Ventilsitz und einer den Ventilsitz ansteuernden Absperrscheibe, die im Gehäuse mittels einer Lagerwelle um eine senkrecht zur Längsachse des Gehäuses angeordnete Drehachse zwischen einer Öffnungsstellung und einer Sperrstellung beidseitig drehbar gelagert ist.

Eine gattungsgemäße Absperrarmatur, die eine doppelt-exzentrische gelagerte Absperrscheibe aufweist, die mit einer senkrecht zur Längsachse des Gehäuses drehbar gelagerten Lagerwelle zwischen einer Öffnungsstellung und einer Sperrstellung drehbar ist, ist aus der EP 1 207 325 B1 bekannt. Bei bekannten Absperrarmaturen sind zur beidseitigen Lagerung der Absperrscheibe im Gehäuse eine durchgehende Lagerwelle oder geteilte Lagerwellen vorgesehen, die mit der Absperrscheibe drehfest verbunden sind. Bei der aus der EP 1 207 325 B1 bekannten Absperrarmatur sind die geteilten Lagerwellen jeweils in einer Aufnahmebohrung der Absperrscheibe angeordnet und mit der Absperrscheibe drehfest verbunden. An der drehfesten Verbindung der entsprechenden Lagerwelle mit der Absperrscheibe kann jedoch Verschleiß auftreten, wodurch sich im Betrieb nachteilige Effekte auf die Dichtigkeit der Absperrarmatur in der Sperrstellung der Absperrscheibe ergeben können. Zudem führt eine beidseitige Lagerung der Absperrscheibe mittels einer geteilten Lagerwelle zu einem hohen Bauaufwand mit einer hohen Anzahl von Bauteilen, da neben der drehfesten Verbindung der jeweiligen Lagerwelle mit der Absperrscheibe an beiden Lagerwellen eine aufwändige Abdichtung der entsprechenden Lagerwelle nach Außen zur Umgebung erforderlich ist.

Um diese Nachteile zu vermeiden, ist es bereits bekannt, die Absperrscheibe mit der Lagerwelle einteilig und somit einstückig auszuführen. Eine derartige Absperrarmatur mit einer einstückig an der Absperrscheibe ausgebildeten Lagerwelle ist aus der DE 200 19 780 U1 bekannt. Um eine Montage der Absperrscheibe mit der Lagerwelle als Ganzes im Gehäuse zu ermöglichen, ist das Gehäuse als ein an einer Trennfuge geteiltes zweiteiliges Gehäuse ausgeführt. Ein derartiges zweigeteiltes Gehäuse verursacht jedoch einen hohen Bauaufwand und Herstellungsaufwand. Zudem ist bei einem derartigen zweigeteilten Gehäuse sicherzustellen, dass an der Trennfuge des Gehäuses keine Leckage nach Außen zur Umgebung auftritt, wodurch der Bauaufwand und Herstellungsaufwand für das zweigeteilte Gehäuse noch weiter erhöht wird.

Der vorliegenden Erfindung liegt die Aufgabe zugrunde, eine Absperrarmatur der eingangs genannten Gattung zur Verfügung stellen, die im Betrieb eine hohe Dichtigkeit aufweist und einen geringen Bauaufwand sowie einen geringen Herstellungsaufwand ermöglicht.

Diese Aufgabe wird erfindungsgemäß dadurch gelöst, dass die Lagerwelle von an der Absperrscheibe beidseitig einstückig angeformten Lagerwellenstummeln gebildet ist und das Gehäuse als einstückiges und ungeteiltes Gehäuses ausgebildet ist, wobei die Lagerwellenstummel jeweils in zwei Lagerhalbschalen gelagert sind, wobei zumindest eine erste Lagerhalbschale für den jeweiligen Lagerwellenstummel an einem Dichtring ausgebildet ist, der mit dem von der Absperrscheibe angesteuerten Ventilsitz versehen ist, und wobei die Absperrscheibe und der Dichtring von einer stirnseitigen Flanschseite des Gehäuses montierbar sind. Bei der erfindungsgemäßen Absperrarmatur ist somit die Absperrscheibe zur beidseitigen Lagerung mit einstückig angeformten Lagerwellenstummeln versehen. Die Lagerwellenstummel sind somit direkt an der Absperrscheibe angeformt, wodurch ein dreh- und biegesteifer Verbund zwischen den Lagerwellenstummeln und der den Ventilsitz ansteuernden Absperrscheibe erzielt wird, der im Betrieb der Absperrarmatur eine hohe Dichtigkeit der Absperrscheibe in der Sperrstellung ermöglicht. Bei der erfindungsgemäßen Absperrarmatur ist das Gehäuse als einstückiges und ungeteiltes Gehäuse ohne Trennfuge ausgebildet. Die einteilige Ausführung des Gehäuses führt zu einem geringen Herstellungsaufwand für das Gehäuse, wobei weiterhin für die Montage der Absperrscheibe bislang erforderliche Trennfugen und potentielle Leckagestellen nach Außen zur Umgebung wirksam vermieden werden. Um die Absperrscheibe mit den angeformten Lagerwellenstummeln als Ganzes in dem einteiligen Gehäuse montieren zu können, sind die Lagerwellenstummel in zwei Lagerhalbschalen gelagert. Eine erste Lagerhalbschale ist an einem Dichtring ausgebildet, der weiterhin mit dem Ventilsitz versehen ist. Der Dichtring und die in dem Dichtring in der entsprechenden Lagerhalbschale gelagerte Absperrscheibe wird bei der erfindungsgemäßen Absperrarmatur von einer stirnseitigen Flanschseite aus in dem einteiligen Gehäuse montiert, wodurch die Absperrscheibe und der Dichtring als Ganzes auf einfache Weise in dem einteiligen Gehäuse montiert werden können. Die Ausbildung des Ventilsitzes an dem Dichtring führt weiterhin zu einer Integration der Dichtgeometrie in den Dichtring, wodurch der Bauaufwand und der Herstellungsaufwand für das Gehäuse weiter verringert wird.

Die zweite Lagerhalbschale für den jeweiligen Lagerwellenstummel, die zusammen mit der Lagerhalbschale in dem Dichtring den entsprechenden Lagerwellenstummel umschließt und eine entsprechende Lagerstelle für den Lagerwellenstummel bildet, kann gemäß einer Ausgestaltungsform der Erfindung an dem Gehäuse ausgebildet sein. Die zweite Lagerhalbschale ist somit direkt in dem Gehäuse ausgeführt und hergestellt.

Die Herstellung des Gehäuses lässt sich weiter vereinfachen, wenn gemäß einer vorteilhaften Ausgestaltungsform der Erfindung die zweite Lagerhalbschale für den jeweiligen Lagerwellenstummel, die zusammen mit der Lagerhalbschale in dem Dichtring den entsprechenden Lagerwellenstummel umschließt und eine entsprechende Lagerstelle für den Lagerwellenstummel bildet, an einem Lagerring ausgebildet ist, der von einer Flanschseite des Gehäuses montierbar ist. Hierdurch sind besondere Vorteile erzielbar, da im Gehäuse keine Lagerhalbschalen für die Lagerwellenstummel der Absperrscheibe herzustellen sind. Die Lagerwellenstummel an der Absperrscheibe werden hierbei von den Lagerhalbschalen in dem Dichtring und in dem Lagerring umschlossen, die zusammen mit der Absperrscheibe von der Flanschseite des Gehäuses aus montierbar sind.

Gemäß einer bevorzugten Weiterbildung der Erfindung ist das Gehäuse mit einer ringnutförmigen Ausnehmung versehen, in der der Dichtring und/oder der Lagerring einlegbar sind. Eine derartige ringförmige Ausnehmung kann mit geringem Herstellungsaufwand und Fertigungsaufwand an dem Gehäuse an der Flanschseite hergestellt werden, um eine Montage des Dichtringes mit der Absperrscheibe bzw. des Dichtringes und des Lagerringes mit der Absperrscheibe von der Flanschseite des Gehäuses aus zu ermöglichen.

Besondere Vorteile ergeben sich, wenn gemäß einer Weiterbildung der Erfindung die Absperrscheibe in Längsrichtung der Drehachse mit einem axialen Freiheitsgrad gelagert ist und mittels axialer Anlauflager im Gehäuse zentriert ist. Hier wird der Bauaufwand der erfindungsgemäßen Absperrarmatur weiter vereinfacht, da für die Absperrscheibe keine zusätzlichen Axiallager erforderlich sind. Die Lagerung der Absperrscheibe mit einem axialen Freiheitsgrad und die Zentrierung im Gehäuse mittels axialer Anlauflager ermöglicht es auf einfache Weise, dass die Absperrscheibe beim Betätigen in die Sperrstellung das Zentrum des Ventilsitzes in dem Dichtring findet und somit eine hohe Dichtigkeit der Absperrarmatur in der Sperrstellung erzielt wird.

Gemäß einer bevorzugten Weiterbildung der Erfindung ist zum Antrieb der Absperrscheibe eine Antriebswelle vorgesehen, die als drehbar im Gehäuse gelagerte Steckwelle ausgebildet ist, wobei zwischen der Steckwelle und einem Lagerwellenstummel der Absperrscheibe eine drehmomentübertragende Steckverbindung ausgebildet ist. Die Antriebswelle zum Verschwenken der Absperrscheibe zwischen der Sperrstellung und der Öffnungsstellung kann somit als torsionssteife und biegeweiche Steckwelle ausgeführt werden. Die Drehmomentübertragung auf die Absperrscheibe erfolgt mit der drehmomentübertragenden Steckverbindung im Bereich eines Lagerwellenstummels. Die Ausführung der Antriebswelle als biegeweiche Steckwelle führt weiterhin zu einer vereinfachten Lagerung und Abdichtung der Antriebswelle im Gehäuse, da die Einflüsse auf die Dichtungseinrichtung der Antriebswelle, beispielsweise eine Stopfbuchspackung oder eine Abdichtung mittels Dichtungsringen, durch die Querkräfte an den Lagerwellenstummel und somit durch die Querkräfte aus der Lagerung der Absperrscheibe vermieden bzw. reduziert werden.

Gemäß einer vorteilhaften Ausgestaltungsform der Erfindung ist die drehmomentübertragenden Steckverbindung von einem Polygonprofil gebildet. Mit einem Polygonprofil können auf einfache Weise hohe Antriebsdrehmomente bei einer hohen Drehwechselfestigkeit übertragen werden. Zudem ermöglicht ein Polygonprofil auf einfache Weise, dass die Antriebswelle in den Lagerwellenstummel mit geringem Montageaufwand eingesteckt werden kann, wobei weitere Sicherungseinrichtungen nicht erforderlich sind.

Mit besonderen Vorteil ist an dem Ventilsitz gemäß einer Ausführungsform der Erfindung eine von der Absperrscheibe angesteuerte elastische Dichtungseinrichtung angeordnet, wobei der Dichtring als geteilter Dichtring mit einem innerem Ring und einem äußeren Ring ausgebildet ist, zwischen denen ein Aufnahmeraum zur Aufnahme und Halterung der Dichtungseinrichtung ausgebildet ist. Mit einer elastischen Dichtungseinrichtung, die im Dichtring gehalten und befestigt ist und von der Absperrscheibe angesteuert ist, kann eine hohe Dichtigkeit der Absperrarmatur erzielt werden. Die Ausführung des Dichtrings als geteilter Dichtring mit einem inneren und einem äußeren Ring ermöglicht es auf einfache Weise, einen Aufnahmeraum für die Dichtungseinrichtung an den beiden Ringen herzustellen und die Dichtungseinrichtung zwischen den beiden Ringen zu befestigen. Hierdurch wird eine weitere Verringerung des Herstellungsaufwandes der erfindungsgemäßen Absperrarmatur erzielt, da die Dichtgeometrie in dem Bereich der beiden Ringe gelegt wird und der von der Absperrscheibe angesteuerte Ventilsitz mit der Dichtungseinrichtung auf einfache Weise an den bevorzugt rotationssymmetrischen Ringen hergestellt werden kann.

Zweckmäßigerweise ist der Dichtring mit dem Gehäuse an der Flanschseite verschraubt. Hierdurch wird auf einfache Weise ermöglicht, die in den beiden Lagerhalbschalen gelagerte Absperrscheibe zusammen mit dem Dichtringe als Ganzes von der Flanschseite aus in das Gehäuse einzulegen und im Gehäuse zu montieren und über die Verschraubungen des Dichtringes im Gehäuse zu befestigen.

Bei einer Ausführung des Dichtrings als geteilter Dichtring ist bevorzugt der äußere Ring des Dichtringes mit dem Gehäuse an der Flanschseite verschraubt, wobei der innere Ring mit dem äußeren Ring verschraubt oder der innere Ring zwischen dem äußeren Ring und dem Gehäuse eingeklemmt ist. Bei einem geteilten Dichtring kann somit auf einfache Weise der innere Ring an dem äußeren Ring befestigt oder zwischen dem Gehäuse und dem äußeren Ring eingeklemmt werden.

Zweckmäßigerweise ist zur Abdichtung des Dichtringes gegenüber dem Gehäuse eine Dichtungseinrichtung, insbesondere ein Dichtungsring, vorgesehen. Mit einer derartigen Dichtungseinrichtung kann auf einfache Weise der Gehäuseinnenraum im Bereich des in der Ausnehmung des Gehäuses eingelegten und befestigten Dichtrings nach außen zur Umgebung abgedichtet werden.

Weitere Vorteile und Einzelheiten der Erfindung werden anhand der in den schematischen Figuren dargestellten Ausführungsbeispiele näher erläutert. Hierbei zeigt
- Figur 1: eine erste Ausführungsform einer erfindungsgemäßen Absperrarmatur in einem Längsschnitt,
- Figur 2: einen Ausschnitt der Figur 1 in einer vergrößerten Darstellung,
- Figur 3: das Gehäuse mit eingelegtem Dichtring,
- Figuren 4a, 4b, 4c: das Gehäuse und der zweiteilige Dichtring in einer aufgelösten Darstellung,
- Figur 5: eine zweite Ausführungsform einer erfindungsgemäßen Absperrarmatur in einem Längsschnitt,
- Figur 6: einen Ausschnitt der Figur 5 in einer vergrößerten Darstellung,
- Figur 7: das Gehäuse der Figuren 5, 6 mit eingelegtem Dichtring und eingelegten Lagerring und
- Figuren 8a, 8b, 8c: das Gehäuse, der zweiteilige Dichtring und der Lagerring in einer aufgelösten Darstellung.

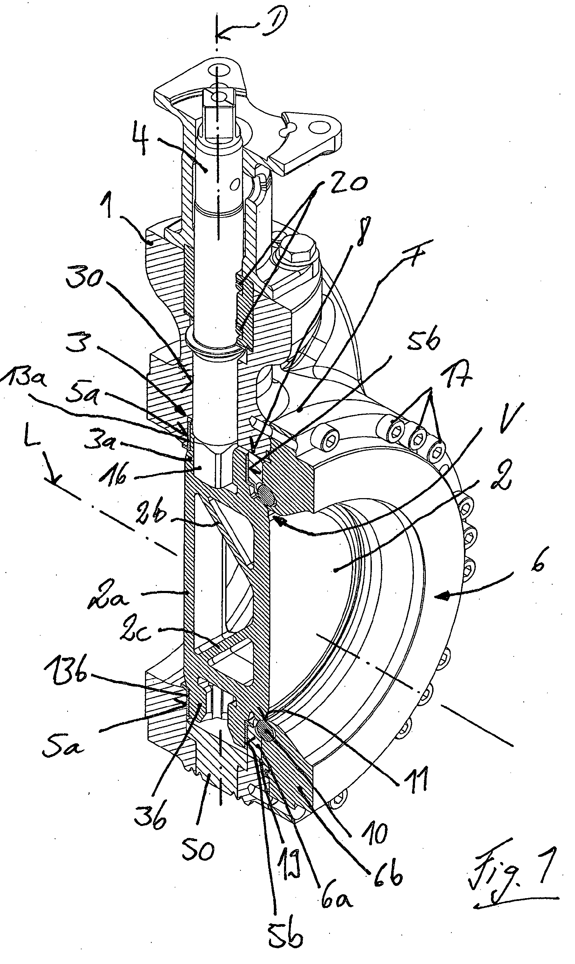

In der Figur 1 ist eine erste Ausführungsform einer erfindungsgemäßen Absperrarmatur in einem Längsschnitt gezeigt.

Die Absperrarmatur weist ein Gehäuse 1 auf, in dem eine Absperrscheibe 2 um eine senkrecht zur Längsachse L des Gehäuses 1 angeordnete Drehachse D drehbar gelagert ist. Die Absperrscheibe 2 ist bezüglich der Längsachse L des Gehäuses 2 beidseitig im Gehäuse 2 drehbar gelagert.

Zur drehbaren Lagerung der Absperrscheibe 2 im Gehäuse 1 ist eine Lagerwelle 3 vorgesehen, mit der die Absperrscheibe 2 beidseitig im Gehäuse 1 drehbar gelagert ist. Bei der erfindungsgemäßen Absperrarmatur ist die Lagerwelle 3 als geteilte Lagerwelle ausgeführt, wobei ein oberer Lagerwellenstummel 3a und ein unteren Lagerwellenstummel 3b einstückig und somit direkt an der Absperrscheibe 2 angeformt sind. Der obere Lagerwellenwellenstummel 3a steht weiterhin zum Antrieb mit einer Antriebswelle 4 in Verbindung.

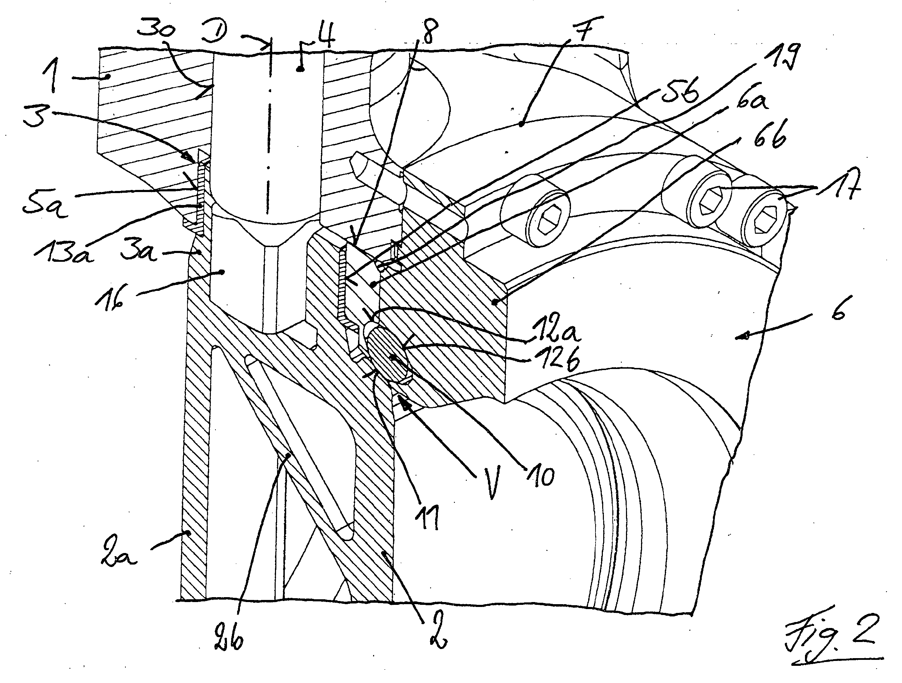

In der Figur 2 ist der Bereich der oberen Lagerstelle mit dem oberen Lagerwellenstummel 3a näher dargestellt. Die untere Lagerstelle mit dem unteren Lagerwellenstummel 3b ist bis auf die Verbindung mit der Antriebswelle 4 analog aufgebaut.

In den Figuren 1 und 2 ist die Absperrscheibe 2 in der Schließstellung dargestellt, in der ein im Gehäuse 1 angeordneter Ventilsitz V von der Absperrscheibe 2 angesteuert ist.

Durch Verschwenken der Absperrscheibe 2 um einen Drehwinkel von 90° um die Drehachse D kann die Absperrscheibe 2 in eine Öffnungsstellung gebracht werden, in der die Absperrarmatur in Längsrichtung und somit in Durchflussrichtung von Medium durchströmbar ist.

Bei der erfindungsgemäßen Absperrarmatur ist das Gehäuse 1 als einstückiges und ungeteiltes Gehäuse ausgebildet.

Zur Aufnahme und Lagerung der Lagerwellenstummel 3a, 3b sind jeweils zwei Lagerhalbschalen 5a, 5b vorgesehen, die den entsprechenden Lagerwellenstummel 3a, 3b um jeweils 180° umschlingen.

Bei dem in den Figuren 1 bis 4c dargestellten Ausführungsbeispiel sind die Lagerhalbschalen 5a für die Lagerwellenstummel 3a, 3b direkt im Gehäuse 1 ausgebildet. Um die Absperrscheibe 2 mit den einstückig angeformten Lagerwellenstummeln 3a, 3b als Ganzes in das einteilige Gehäuse 1 einbauen zu können, sind die Lagerhalbschalen 5b für die Lagerwellenstummel 3a, 3b an einem Dichtring 6 ausgebildet, an dem weiterhin der von der Absperrscheibe 2 angesteuerte Ventilsitz V ausgebildet ist. Die Absperrscheibe 2 mit den angeformten Lagerwellenstummeln 3a, 3b und der mit den Lagerhalbschalen 5b versehene Dichtring 6 können von einer stirnseitigen Flanschseite F aus in das Gehäuse 1 eingelegt und somit im Gehäuse 1 montiert werden.

Das Gehäuse 1 ist hierzu an der stirnseitigen Flanschseite F mit einer ringnut-förmigen Ausnehmung 8 versehen, in die der Dichtring 6 und die mit angeformten Lagerwellenstummeln 3a, 3b versehene Absperrscheibe 2 von der Flanschseite F aus eingelegt werden können.

Bei der erfindungsgemäßen Absperrarmatur ist an dem Ventilsitz V eine elastische Dichtungseinrichtung 10, beispielsweise ein elastischer Dichtungsring, angeordnet, die am Dichtring 6 befestigt ist. Die Absperrscheibe 2 ist mit einer Dichtfläche 11 versehen, beispielsweise einer Kegelfläche, die in der Sperrstellung die Dichtungseinrichtung 10 ansteuert. Der Dichtring 6 ist zur Aufnahme der Dichtungseinrichtung 10 als geteilter Dichtring mit einem inneren Ring 6a und einem äußeren Ring 6b ausgebildet. In dem inneren Ring 6a und dem äußeren Ring 6b ist jeweils eine Ringnut 12a, 12b ausgebildet, die zusammen eine ringkanalartigen Aufnahmeraum bilden, in dem der Dichtungsring 10 eingelegt und gehalten ist.

Die Absperrscheibe 2 ist bevorzugt doppelt-exzentrisch im Gehäuse 1 angeordnet. Die Absperrscheibe 2 ist mit der Dichtfläche 11 ist von der Drehachse D - wie in der Figur 1 ersichtlich ist - in Längsrichtung der Längsachse L der Absperrarmatur beabstandet, wodurch eine erste Exzentrizität gebildet ist. Durch eine seitliche Beabstandung der Drehachse D von einer senkrecht zur Längsachse L stehenden Mittelachse des Gehäuses 1 wird eine zweite Exzentrizität gebildet.

Bei der erfindungsgemäßen Absperrarmatur ist die Absperrscheibe 2 in Längsrichtung der Drehachse D mit einem axialen Freiheitsgrad gelagert. Zur Zentrierung der Absperrscheibe 2 in Längsrichtung der Drehachse D sind im Bereich der Lagerwellenstummel 3a, 3b jeweils Anlauflager 13a, 13b vorgesehen. Die Anlauflager 13a, 13b sind im dargestellten Ausführungsbeispiel von Lagerbuchsen mit einem Anlaufbund gebildet, die zwischen den Lagerhalbschalen 5a, 5b und dem entsprechenden Lagerwellenstummel 3a, 3b angeordnet sind.

Die Antriebswelle 4 ist als drehbar im Gehäuse 1 angeordnete torsionssteife und biegeweiche Steckwelle ausgebildet ist. Die Antriebswelle 4 steht im dargestellten Ausführungsbeispiel mit dem oberen Lagerwellenstummel 3a in Verbindung und ist in den oberen Lagerwellenstummel 3a eingesteckt, wobei zwischen dem Lagerwellenstummel 3a und der Antriebswelle 4 eine drehmomentübertragende Steckverbindung 16 ausgebildet ist. Die Steckverbindung 16 ist bevorzugt von einem Polygonprofil am Außenumfang der Antriebswelle 4 und einer Aufnahmeöffnung des Lagerwellenstummels 3a gebildet.

Der äußere Ring 6b des Dichtringes 6 ist an der Flanschseite F an dem Gehäuse 1 befestigt, wozu im dargestellten Ausführungsbeispiel mehrere Befestigungsschrauben 17 vorgesehen sind. Der innere Ring 6a kann an dem äußeren Ring 6b nach dem Einlegen der Dichtungseinrichtung 10 mittels Befestigungsschrauben befestigt werden. Im dargestellten Ausführungsbeispiel ist der innere Ring 6azwischen dem Gehäuse 1 und dem äußeren Ring 6b eingeklemmt und wird von dieser Klemmverbindung gehalten.

Um den Gehäuseinnenraum am Dichtring 6 gegenüber der Umgebung nach Außen abzudichten, ist zwischen dem Dichtring 6, bevorzugt dem äußeren Ring 6b und der nutförmigen Ausnehmung 8 des Gehäuses 1 eine Dichtungseinrichtung 19, beispielsweise ein als O-Ring ausgebildeter Dichtungsring, angeordnet.

Zur Abdichtung der Antriebswelle 4 nach Außen gegenüber der Umgebung ist eine entsprechende Wellendichtung 20 vorgesehen, die beispielsweise von einer Stopfbuchspackung gebildet ist.

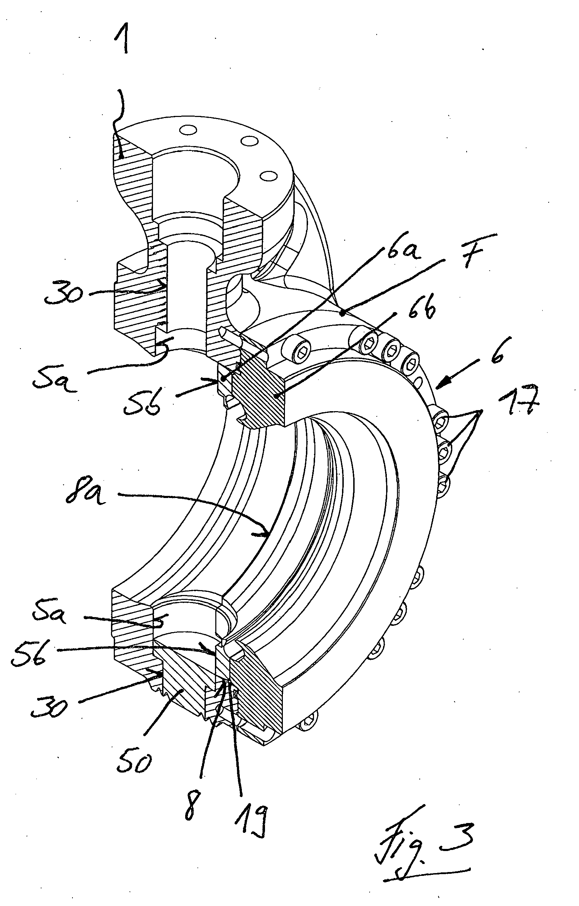

In der Figur 3 ist das Gehäuse 1 und der aus den beiden Ringen 6a, 6b bestehende Dichtring 6 in einem vorbearbeiteten Zustand dargestellt. An dem Gehäuse 1 ist die Ausnehmung 8 und an der Flanschseite F der Befestigungsflansch zur Befestigung des Dichtrings 6 gefertigt. Die beiden Ringe 6a, 6b des Dichtrings 6 sind als rotationssymmetrische Drehteile ausgebildet, in denen die Ringnuten 12a, 12b zur Aufnahme der Dichtungseinrichtung auf einfache Weise hergestellt werden können.

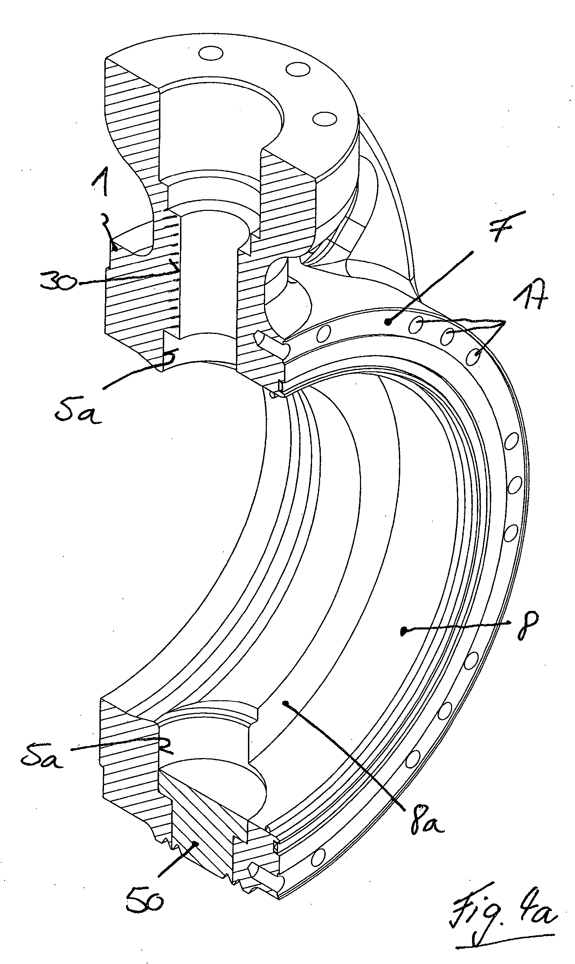

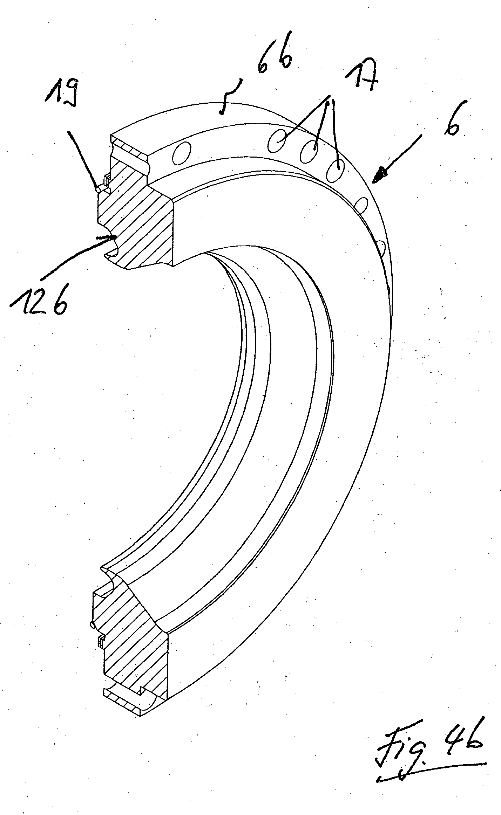

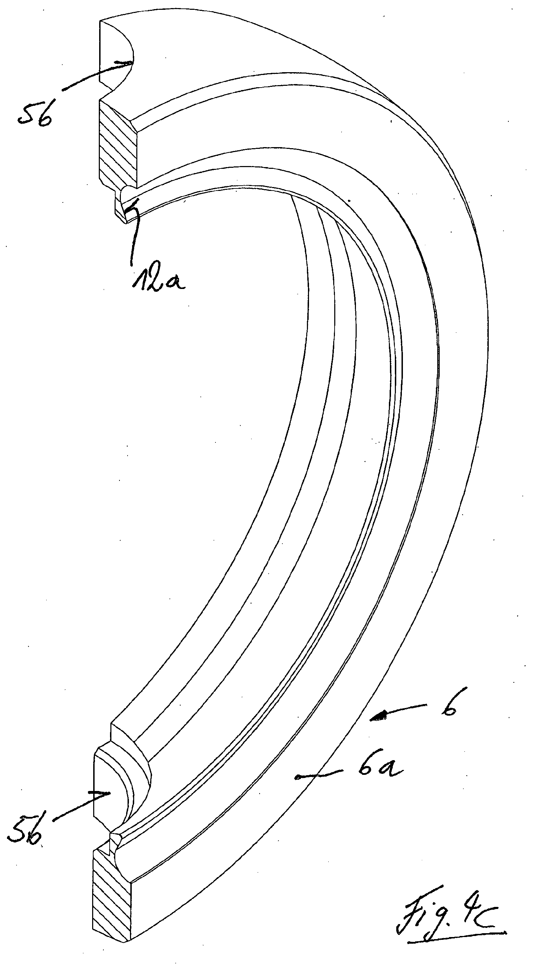

In der Figur 4a ist das Gehäuse 1, der Figur 4b der äußere Ring 6b und der Figur 4c der innere Ring 6a als Einzelteile dargestellt.

Bevorzugt wird bei der erfindungsgemäßen Absperrarmatur der Figuren 1 bis 4c nach dem Einbau der beiden Ringe 6a, 6b des Dichtringes 6 in die Ausnehmung 8 des Gehäuses 1 eine Lagerbohrung 30 gefertigt und somit an dem Nutgrund 8a der Ausnehmung 8 des Gehäuses 1 und dem Dichtring 6 die entsprechenden Lagerhalbschalen 5a, 5b für die Lagerwellenstummel 3a, 3b hergestellt und in dem Gehäuse 1 eine Durchgangsbohrung zur Aufnahme der Antriebswelle 4 gebildet. In den Figuren 1, 3 und 4a ist im Bereich des unteren Lagerwellenstummels 3b ein Stopfen 50 dargestellt, der nach nach der Herstellung der Lagerhalbschalen 5a, 5b von Innen in Lagerbohrung 30 eingesetzt wird und bevorzugt mit dem Gehäuse 1 verschweißt wird.

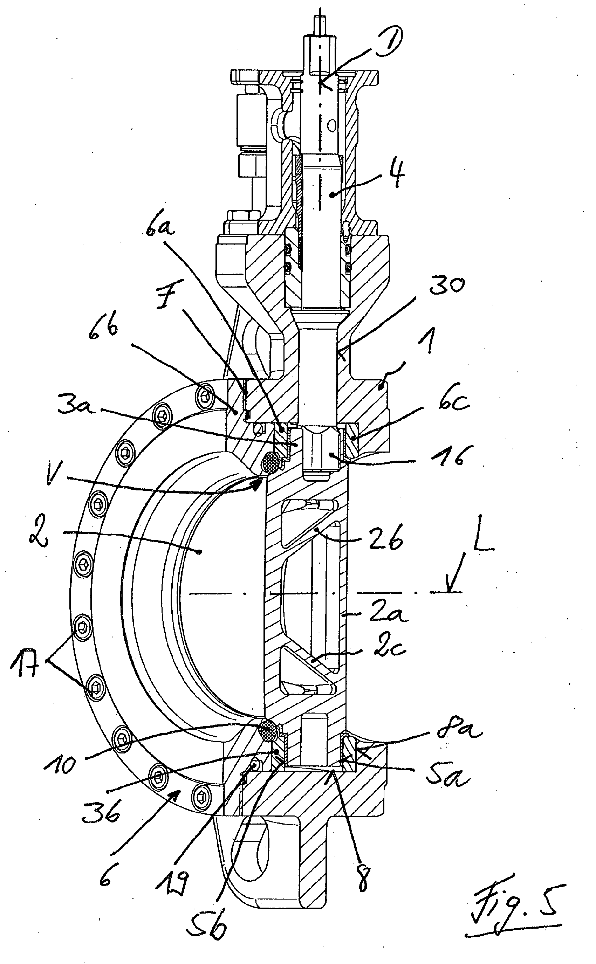

In den Figuren 5 bis 8c ist eine zweite Ausführungsform in der erfindungsgemäßen Absperrarmatur dargestellt, wobei mit der ersten Ausführungsform übereinstimmende Bauteile mit gleichen Bezugsziffern versehen sind.

Um bei der Ausführungsform der Figuren 5 bis 8c die in dem Gehäuse 1 herzustellende Lagerhalbschalen 5a für die Lagerwellenstummel 3a, 3b an dem Nutgrund 8a der Ausnehmung 8 zu vermeiden, ist ein zusätzlicher Lagerring 6c vorgesehen, in dem die Lagerhalbschale 5a für die Lagerwellenstummel 3a, 3b hergestellt sind. Der Lagerring 6c kann von der Flanschseite F aus in die nutförmige Ausnehmung 8 des Gehäuses 1 eingelegt und montiert werden. Der Lagerring 6c ist bevorzugt durch den Dichtring 6 an dem Nutgrund 8a der Ausnehmung 8 im Gehäuse 1 verklemmt.

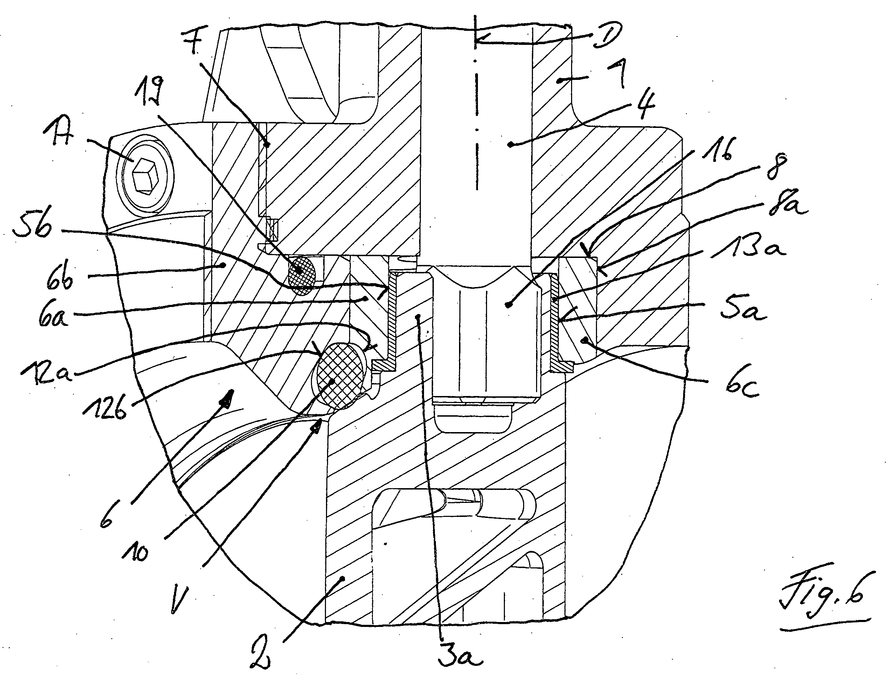

In der Figur 6 ist der Bereich der oberen Lagerstelle mit dem oberen Lagerwellenstummel 3a näher dargestellt.

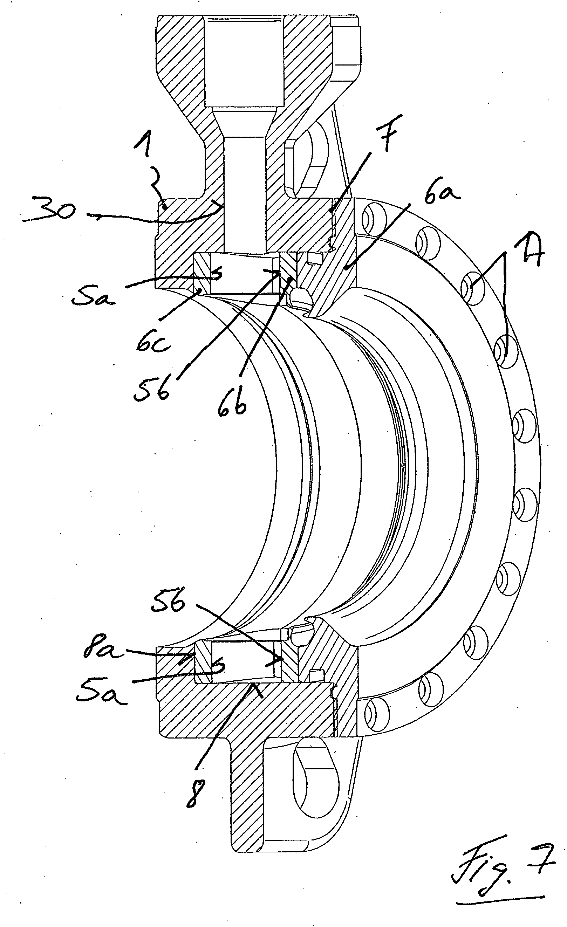

In der Figur 7 ist das Gehäuse 1 und der aus den beiden Ringen 6a, 6b bestehende Dichtring 6 sowie der Lagerring 6c in einem zusammengesetzten Zustand dargestellt.

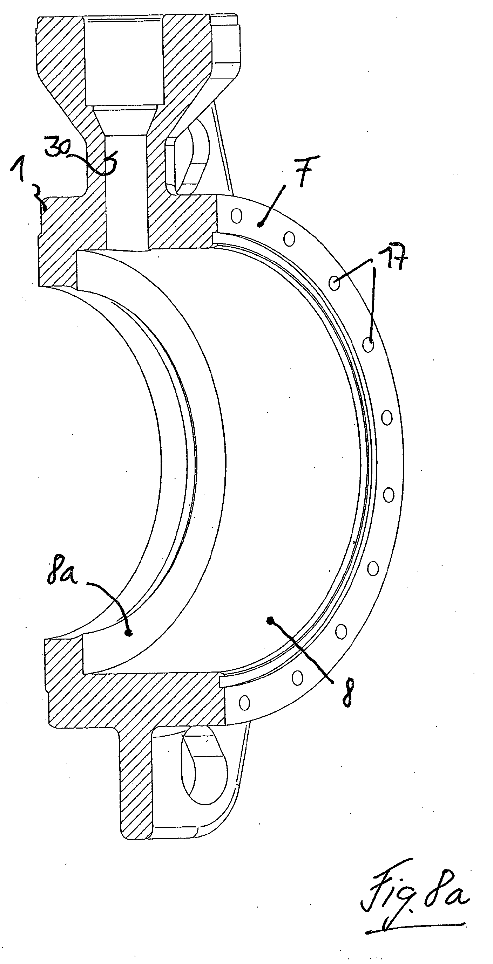

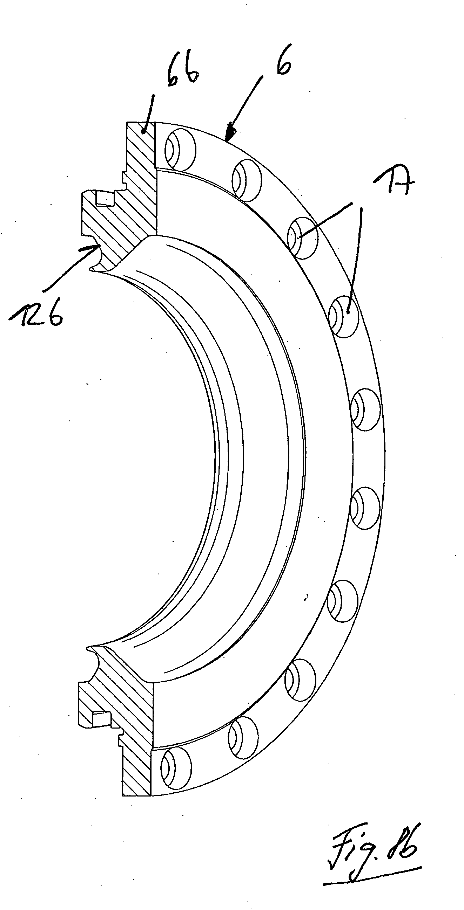

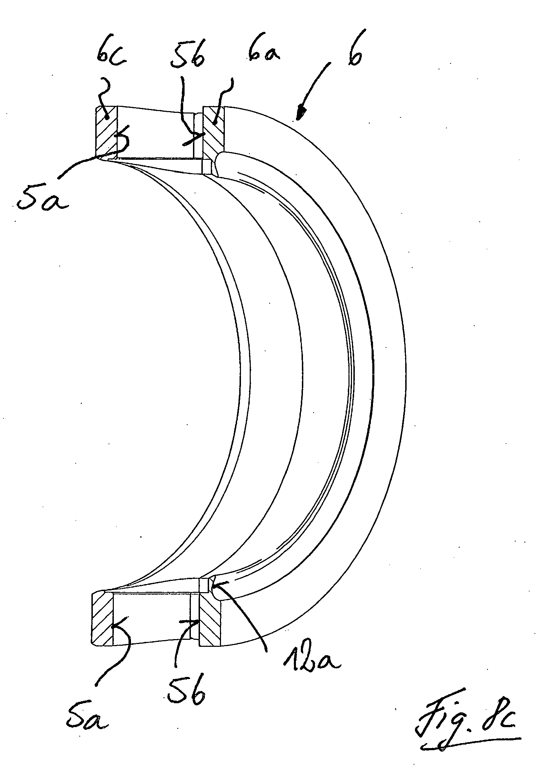

In der Figur 8a ist das Gehäuse 1 und in der Figur 8b der äußere Ring 6b als Einzelteil dargestellt. Die Figur 8c zeigt den innere Ring 6a und den Lagerring 6c als Einzelteile in einem zusammengesetzten Zustand, wobei die Lagerhalbschalen 5a, 5b für die Lagerwellenstummel 3a, 3b der Absperrscheibe 2 in dem inneren Ring 6b des Dichtrings 6 und dem Lagerring 6c verdeutlicht sind.

Bei der erfindungsgemäßen Absperrarmatur gemäß den Figuren 1 bis 8c ist die Absperrscheibe 2 mit den einstückig angeformten Lagerwellenstummeln 3a, 3b als biegesteife und fachwerkartige Struktur ausgebildet, die mehrere Versteifungsrippen 2a, 2b, 2c umfasst. Die Absperrscheibe 2 ist bevorzugt als Gußbauteil ausgebildet.

Bei der Montage der Absperrarmatur wird bei der Ausführungsform gemäß den Figuren 1 bis 4c die Absperrscheibe 2 von der Flanschseite F aus über die Ausnehmung 8 mit den angeformten Lagerwellenstummeln 3a, 3b in die in dem Gehäuse 1 ausgebildete Lagerhalbschale 5a eingelegt und anschließend der aus denen Ringen 6a, 6b und mit der Dichtungseinrichtung 10 bestehende Dichtring 6 von der Flanschseite F aus über die Ausnehmung 8 in das Gehäuse 2 eingelegt und mittels der Befestigungsschrauben 17 am Gehäuse 1 befestigt.

Bei dem Ausführungsbeispiel der Figuren 5 bis 8c wird bei der Montage der Absperrarmatur die Absperrscheibe 2 mit den angeformten Lagerwellenstummeln 3a, 3b in die Lagerhalbschalen 5a, 5b an dem Dichtring 6 (innerer Ring 6a) und dem Lagerring 6c und somit zwischen den Dichtring 6 und den Lagerring 6c eingelegt und die Absperrscheibe 2 zusammen mit den von den beiden Ringen 6a, 6b und der Dichtungseinrichtung 10 bestehenden Dichtring 6 und dem Lagerring 6c von der Flanschseite F über die Ausnehmung 8 in das Gehäuse 2 eingelegt und mittels der Befestigungsschrauben 17 am Gehäuse 1 befestigt werden.

Die Antriebswelle 4 kann anschließend über die Steckverbindung 16 mit dem Lagerwellenstummel 3a verbunden werden.

Die erfindungsgemäße Absperrarmatur weist eine Reihe von Vorteilen auf.

Die erfindungsgemäße Absperrarmatur weist eine geringe Anzahl von Bauteilen auf, wodurch ein geringer Bauaufwand und Herstellungsaufwand erzielbar ist. Durch die einstückige Ausbildung der Lagerwellenstummel 3a, 3b an der Absperrscheibe 2 und dem im Entfall einer Verbindung zwischen separaten Lagerwellen und der Absperrscheibe 2 entsteht ein dreh- und die biegesteifer Verbund von der Absperrscheibe 2 mit den angeformten Lagerwellenstummeln 3a, 3b und den Lagerstellen im Gehäuse 1, wodurch eine hohe Dichtigkeit der Absperrarmatur erzielt wird.

Das einteilige Gehäuse 1 der erfindungsgemäßen Absperrarmatur ist lediglich an einer Seite im Bereich der Lagerbohrung 30 und der Durchführung der Antriebswelle 4 nach außen zur Umgebung offen und muss daher nur an dieser einzigen Stelle zur Umgebung abgedichtet werden.

Durch die Ausführung der Antriebswelle 4 als torsionssteife und biegeweiche Steckwelle können die Einflüsse auf die Abdichtung der Antriebswelle 4 nach außen zur Umgebung durch die Querkräfte im Bereich der von den Lagerwellenstummeln 3a, 3b gebildeten Lagerstellen der Absperrscheibe 2 verringert bzw. reduziert werden,

## Patentansprüche

1. Absperrarmatur mit einem Gehäuse (1), einem in dem Gehäuse (1) angeordneten Ventilsitz (V) und einer den Ventilsitz (V) ansteuernden Absperrscheibe (2), die im Gehäuse (1) mittels einer Lagerwelle (3a, 3b) um eine senkrecht zur Längsachse (L) des Gehäuses (1) angeordnete Drehachse (D) zwischen einer Öffnungsstellung und einer Sperrstellung beidseitig drehbar gelagert ist, **dadurch gekennzeichnet, dass** die Lagerwelle (3) von an der Absperrscheibe (2) beidseitig einstückig angeformten Lagerwellenstummeln (3a, 3b) gebildet ist und das Gehäuse (1) als einstückiges und ungeteiltes Gehäuses ausgebildet ist, wobei die Lagerwellenstummel (3a, 3b) jeweils in zwei Lagerhalbschalen (5a, 5b) gelagert sind, wobei zumindest eine erste Lagerhalbschale (5b) für den jeweiligen Lagerwellenstummel (3a, 3b) an einem Dichtring (6) ausgebildet ist, der mit dem von der Absperrscheibe (2) angesteuerten Ventilsitz (V) versehen,ist, und wobei die Absperrscheibe (2) und der Dichtring (6) von einer stirnseitigen Flanschseite (F) des Gehäuses (1) montierbar sind.

2. Absperrarmatur nach Anspruch 1, **dadurch gekennzeichnet, dass** eine zweite Lagerhalbschale (5a) für den jeweiligen Lagerwellenstummel (3a, 3b) an dem Gehäuse (1) ausgebildet ist.

3. Absperrarmatur nach Anspruch 1, **dadurch gekennzeichnet, dass** eine zweite Lagerhalbschale (5a) für den jeweiligen Lagerwellenstummel (3a, 3b) an einem Lagerring (6c) ausgebildet ist, der von einer Flanschseite (F) des Gehäuses (1) montierbar ist.

4. Absperrarmatur nach einem der Ansprüche 1 bis 3, **dadurch gekennzeichnet, dass** das Gehäuse (1) mit einer ringnutförmigen Ausnehmung (8) versehen ist, in der der Dichtring (6) und/oder der Lagerring (6c) einlegbar ist.

5. Absperrarmatur nach einem der Ansprüche 1 bis 4, **dadurch gekennzeichnet, dass** die Absperrscheibe (2) in Längsrichtung der Drehachse (D) mit einem axialen Freiheitsgrad gelagert ist und mittels axialer Anlauflager (13a, 13b) im Gehäuse (1) zentriert ist.

6. Absperrarmatur nach einem der Ansprüche 1 bis 5, **dadurch gekennzeichnet, dass** zum Antrieb der Absperrscheibe (2) eine Antriebswelle (4) vorgesehen ist, die als drehbar im Gehäuse (1) gelagerte Steckwelle ausgebildet ist, wobei zwischen der Steckwelle und einem Lagerwellenstummel (3a; 3b) der Absperrscheibe (2) eine drehmomentübertragende Steckverbindung (16) ausgebildet ist.

7. Absperrarmatur nach Anspruch 6, **dadurch gekennzeichnet, dass** die drehmomentübertragenden Steckverbindung (16) von einem Polygonprofil gebildet ist.

8. Absperrarmatur nach einem der Ansprüche 1 bis 7, **dadurch gekennzeichnet, dass** an dem Ventilsitz (V) eine von der Absperrscheibe (2) angesteuerte elastische Dichtungseinrichtung (10) angeordnet ist, wobei der Dichtring (6) als geteilter Dichtring mit einem innerem Ring (6a) und einem äußeren Ring (6b) ausgebildet ist, zwischen denen ein Aufnahmeraum zur Aufnahme und Halterung der Dichtungseinrichtung (10) ausgebildet ist.

9. Absperrarmatur nach einem der Ansprüche 1 bis 8, **dadurch gekennzeichnet, dass** der Dichtring (6) mit dem Gehäuse (2) an der Flanschseite (F) verschraubt ist.

10. Absperrarmatur nach Anspruch 8 oder 9, **dadurch gekennzeichnet, dass** der äußere Ring (6b) des Dichtringes (6) mit dem Gehäuse (2) an der Flanschseite (F) verschraubt ist, wobei der innere Ring (6a) mit dem äußeren Ring (6b) verschraubt oder der innere Ring (6a) zwischen dem äußeren Ring (6b) und dem Gehäuse (2) eingeklemmt ist.

11. Absperrarmatur nach einem der Ansprüche 1 bis 10, **dadurch gekennzeichnet, dass** zur Abdichtung des Dichtringes (6) gegenüber dem Gehäuse (2) eine Dichtungseinrichtung (19), insbesondere ein Dichtungsring, vorgesehen ist.

## Claims

1. Shut-off valve with a housing (1), a valve seat (V) arranged in the housing (1) and a shut-off disc (2) which activates the valve seat (V) and is mounted on both sides in the housing (1) by means of a bearing shaft (3a, 3b) so as to be rotatable about an axis of rotation (D), which is arranged perpendicularly to the longitudinal axis (L) of the housing (1), between an open position and a blocking position, **characterized in that** the bearing shaft (3) is formed by bearing shaft stubs (3a, 3b) which are integrally formed on the shut-off disc (2) on both sides, and the housing (1) is designed as an integral and undivided housing, wherein the bearing shaft stubs (3a, 3b) are respectively mounted in two bearing half shells (5a, 5b), wherein at least one first bearing half shell (5b) for the respective bearing shaft stub (3a, 3b) is formed on a sealing ring (6) which is provided with the valve seat (V), which is activated by the shut-off disc (2), and wherein the shut-off disc (2) and the sealing ring (6) can be fitted from an end-side flange side (F) of the housing (1).

2. Shut-off valve according to Claim 1, **characterized in that** a second bearing half shell (5a) for the respective bearing shaft stub (3a, 3b) is formed on the housing (1).

3. Shut-off valve according to Claim 1, **characterized in that** a second bearing half shell (5a) for the respective bearing shaft stub (3a, 3b) is formed on a bearing ring (6c) which can be fitted from a flange side (F) of the housing (1).

4. Shut-off valve according to one of Claims 1 to 3, **characterized in that** the housing (1) is provided with a recess (8) which is in the shape of an annular groove and in which the sealing ring (6) and/or the bearing ring (6c) can be placed.

5. Shut-off valve according to one of Claims 1 to 4, **characterized in that** the shut-off disc (2) is mounted with an axial degree of freedom in the longitudinal direction of the axis of rotation (D) and is centred in the housing (1) by means of axial stop bearings (13a, 13b).

6. Shut-off valve according to one of Claims 1 to 5, **characterized in that** a drive shaft (4) which is designed as a plug-in shaft mounted rotatably in the housing (1) is provided for driving the shut-off disc (2), wherein a torque-transmitting plug-in connection (16) is formed between the plug-in shaft and a bearing shaft stub (3a; 3b) of the shut-off disc (2).

7. Shut-off valve according to Claim 6, **characterized in that** the torque-transmitting plug-in connection (16) is formed by a polygonal profile.

8. Shut-off valve according to one of Claims 1 to 7, **characterized in that** an elastic sealing device (10) which is activated by the shut-off disc (2) is arranged on the valve seat (V), wherein the sealing ring (6) is designed as a divided sealing ring with an inner ring (6a) and an outer ring (6b), between which a receiving space for receiving and holding the sealing device (10) is formed.

9. Shut-off valve according to one of Claims 1 to 8, **characterized in that** the sealing ring (6) is screwed to the housing (2) on the flange side (F).

10. Shut-off valve according to Claim 8 or 9, **characterized in that** the outer ring (6b) of the sealing ring (6) is screwed to the housing (2) on the flange side (F), wherein the inner ring (6a) is screwed to the outer ring (6b) or the inner ring (6a) is clamped between the outer ring (6b) and the housing (2).

11. Shut-off valve according to one of Claims 1 to 10, **characterized in that** a sealing device (19), in particular a sealing ring, is provided for sealing off the sealing ring (6) in relation to the housing (2).

## Revendications

1. Robinet d'arrêt comprenant un boîtier (1), un siège de soupape (V) disposé dans le boîtier (1) et un disque d'arrêt (2) commandant le siège de soupape (V), qui est supporté dans le boîtier (1) au moyen d'un arbre de palier (3a, 3b) de manière à pouvoir tourner des deux côtés autour d'un axe de rotation (D) disposé perpendiculairement à l'axe longitudinal (L) du boîtier (1) entre une position d'ouverture et une position d'arrêt, **caractérisé en ce que** l'arbre de palier (3) est formé par des bouts d'arbre de palier (3a, 3b) formés d'une seule pièce des deux côtés au niveau du disque d'arrêt (2) et le boîtier (1) est réalisé sous forme de boîtier d'une seule pièce et non divisé, les bouts d'arbre de palier (3a, 3b) étant supportés à chaque fois dans deux demi-coques de palier (5a, 5b), au moins une première demi-coque de palier (5b) étant réalisée pour le bout d'arbre de palier respectif (3a, 3b) au niveau d'une bague d'étanchéité (6), qui est pourvue du siège de soupape (V) commandé par le disque d'arrêt (2), et le disque d'arrêt (2) et la bague d'étanchéité (6) pouvant être montés depuis un côté de bride frontal (F) du boîtier (1).

2. Robinet d'arrêt selon la revendication 1, **caractérisé en ce qu'**une deuxième demi-coque de palier (5a) est réalisée pour le bout d'arbre de palier respectif (3a, 3b) au niveau du boîtier (1).

3. Robinet d'arrêt selon la revendication 1, **caractérisé en ce qu'**une deuxième demi-coque de palier (5a) est réalisée pour le bout d'arbre de palier respectif (3a, 3b) au niveau d'une bague de palier (6c) qui peut être montée depuis un côté de bride (F) du boîtier (1).

4. Robinet d'arrêt selon l'une quelconque des revendications 1 à 3, **caractérisé en ce que** le boîtier (1) est pourvu d'un évidement (8) en forme de rainure annulaire, dans lequel peut être introduite la bague d'étanchéité (6) et/ou la bague de palier (6c).

5. Robinet d'arrêt selon l'une quelconque des revendications 1 à 4, **caractérisé en ce que** le disque d'arrêt (2) est supporté dans la direction longitudinale de l'axe de rotation (D) avec un degré de liberté axial et est centré dans le boîtier (1) au moyen de paliers de butée axiaux (13a, 13b).

6. Robinet d'arrêt selon l'une quelconque des revendications 1 à 5, **caractérisé en ce que** pour l'entraînement du disque d'arrêt (2), il est prévu un arbre d'entraînement (4) qui est réalisé sous forme d'arbre enfichable supporté à rotation dans le boîtier (1), une connexion par enfichage (16) transmettant le couple étant réalisée entre l'arbre enfichable et un bout d'arbre de palier (3a, 3b) du disque d'arrêt (2).

7. Robinet d'arrêt selon la revendication 6, **caractérisé en ce que** la connexion par enfichage (16) transmettant le couple est formée par un profil polygonal.

8. Robinet d'arrêt selon l'une quelconque des revendications 1 à 7, **caractérisé en ce qu'**un dispositif d'étanchéité élastique (10) commandé par le disque d'arrêt (2) est disposé au niveau du siège de soupape (V), la bague d'étanchéité (6) étant réalisée sous forme de bague d'étanchéité divisée avec une bague intérieure (6a) et une bague extérieure (6b), entre lesquelles un espace de réception est réalisé pour recevoir et retenir le dispositif d'étanchéité (10).

9. Robinet d'arrêt selon l'une quelconque des revendications 1 à 8, **caractérisé en ce que** la bague d'étanchéité (6) est vissée avec le boîtier (2) au niveau du côté de bride (F).

10. Robinet d'arrêt selon la revendication 8 ou 9, **caractérisé en ce que** la bague extérieure (6b) de la bague d'étanchéité (6) est vissée au boîtier (2) au niveau du côté de bride (F), la bague intérieure (6a) étant vissée à la bague extérieure (6b) ou la bague intérieure (6a) étant serrée entre la bague extérieure (6b) et le boîtier (2).

11. Robinet d'arrêt selon l'une quelconque des revendications 1 à 10, **caractérisé en ce que** pour l'étanchéité de la bague d'étanchéité (6) par rapport au boîtier (2), il est prévu un dispositif d'étanchéité (19), en particulier un joint d'étanchéité annulaire.
